# EUROPEAN PATENT SPECIFICATION

(11) **EP 1 473 912 B1**
(45) Date of publication and mention of the grant of the patent: **13.06.2012**
(21) Application number: 03009615.0
(22) Date of filing: 29.04.2003
(51) Int. Cl.: H04M 1/57

(54) **Mobile terminal for a wireless communication system**
Mobiler Terminal für ein drahtloses Telekommunikationssystem
Terminal mobile pour un système de communication sans fil

(43) Date of publication of application: 03.11.2004
(73) Proprietor: Sony Ericsson Mobile Communications AB, 221 88 Lund (SE)
(72) Inventor: Stupiggia, Andrea, Sony Ericsson Mobile Com., Int., 85609 Aschheim-Dornach (DE)
(74) Representative: Banzer, Hans-Jörg

(56) References cited:
- EP-A- 0 963 088
- WO-A-92/02097
- AU-B- 587 697
- FR-A- 2 639 168
- US-A- 6 031 900
- PATENT ABSTRACTS OF JAPAN vol. 004, no. 079 (E-014), 7 June 1980 (1980-06-07) & JP 55 047756 A (TOMINAGA OIL PUMP MFG CO LTD), 4 April 1980 (1980-04-04)

## Description

The invention relates to a mobile terminal for a wireless communication system according to claims 1 and 10.

Users of mobile phones often do a single ring or a predefined number of rings to a remote user instead of calling or sending an SMS to let the partner know "I'm thinking of you in this moment", to ask the partner to call back or to notify the occurrence of a predefined event. Hereby, it is possible to save the cost of a call or a SMS. When calling, it is difficult to decide exactly when to terminate the call, and when receiving a call, which is terminated by the caller, the intention of the caller may not be clear.

Document JP 55047756 discloses a recording unit of information transmission. In order to perform information transmission similar to the automatic answering telephone, by recording the number of times of call-out tone of telephone and giving specific meaning to the number of times respectively, the tone of the telephone is picked up by a microphone, amplified, rectified and input to a circuit for counting the number of call tones. Depending on the counted number of call tones one or more lamps connected to the circuit are illuminated. By giving significance to the different lamps, the transmission of information is enabled.

Document EP 0 963 088 A1 discloses a method and system for transmitting information through a telephone network. Hereby a sending device converts the information into a length and time of ringing. A transceiver causes the receiving station to ring for that length of time. The receiving station determines the ringing time and converts it back to the information initially sent. The system enables data transmission avoiding costs for a telephone connection and is preferably applicable for truck fleet management.

It is therefore the object of the present invention to provide a system and method for mobile phones to terminate an outgoing call after a predefined number of rings and to handle an incoming call depending on how many rings have been received.

This object is achieved by as system as defined in claims 1 and 10.

According to the present invention a mobile terminal for a wireless communication system is described, comprising an input means for the input of information by a user, a transmitting means for transmitting a call to a phone number selected by the user, a ring counter for counting the number of rings of an outgoing call transmitted by the transmitting means and a call processing means for setting up a call via the transmitting means and terminating the call after a predefined number of rings counted by the ring counter according to a ring counting information input by the user. Hereby, the ring counter counts the number of rings by measuring the time between the beginning and the end of a call according to messages sent to and received from the network.

Further, according to the present invention a mobile terminal for a wireless communication system is described, comprising an output means for outputting information to an user, a receiving means for receiving a call, a ring counter for counting the number of rings of an incoming call received by the receiving means and a call processing means for outputting via the output means information of an incoming call to a user according to the number of rings counted by the ring counter. Hereby, the ring counter counts the number of rings by measuring the time between the beginning and the end of a call according to messages sent to and received from the network.

Advantageously an output means outputs information of a call processed by the call processing means to the user.

Further, advantageously a ring counting menu enables the user to select via the input means the number of calls which are terminated by the call processing means after a predefined number of rings.

Preferably the ring counting menu enables the user to select via the input means the number of rings after which the call processing means terminates the calls.

A phone book can store phone numbers input by the user.

A storage means can store information of an outgoing call.

Preferably the call processing means sets up one call and terminates the call after one ring counted by the ring counter.

Further, preferably the call processing means sets up two calls to the same number and terminates the first call after one ring and the second call after a predefined number or rings counted by the ring counter.

The predefined number of rings, after which the call processing means terminates the second call can be a number from 1 to 3.

Advantageously an input means accepts input of information by a user.

A phone book can store phone numbers input by the user.

A storage means can store information of a first incoming call.

Advantageously the call processing means compares the number of a second incoming call with the number of the first incoming call stored in the storage means.

Further, advantageously the call processing means outputs via the output means a single ring message, if the number of the second incoming call is not the same as the number of first incoming call and if the first call is terminated after one ring counted by the ring counter.

In a preferred embodiment the call processing means outputs a special message via the output means, if the number of the second incoming call is the same as the number of the first incoming call and if the first call was terminated after one ring and the second call terminated after one, two or three rings.

Preferably the content of the special message depends on the number of rings of the second incoming call counted by the ring counter.

The messages can be stored in the storage means and automatically be deleted after they have been read by the user.

Embodiments of the invention will now be described, by way of example only, with reference to the accompanying drawing in which
Fig. 1 is a block diagram showing schematically the elements of the system,
Fig. 2 is a user menu for the first embodiment of the invention,
Fig. 3 is a flowchart showing the process for handling an incoming call for the first embodiment of the invention,
Fig. 4 is a flowchart showing the process of handling a message,
Fig. 5 is a user menu for the second embodiment of the invention and
Fig. 6 is a flowchart showing the process of handling an incoming call for the second embodiment of the invention.

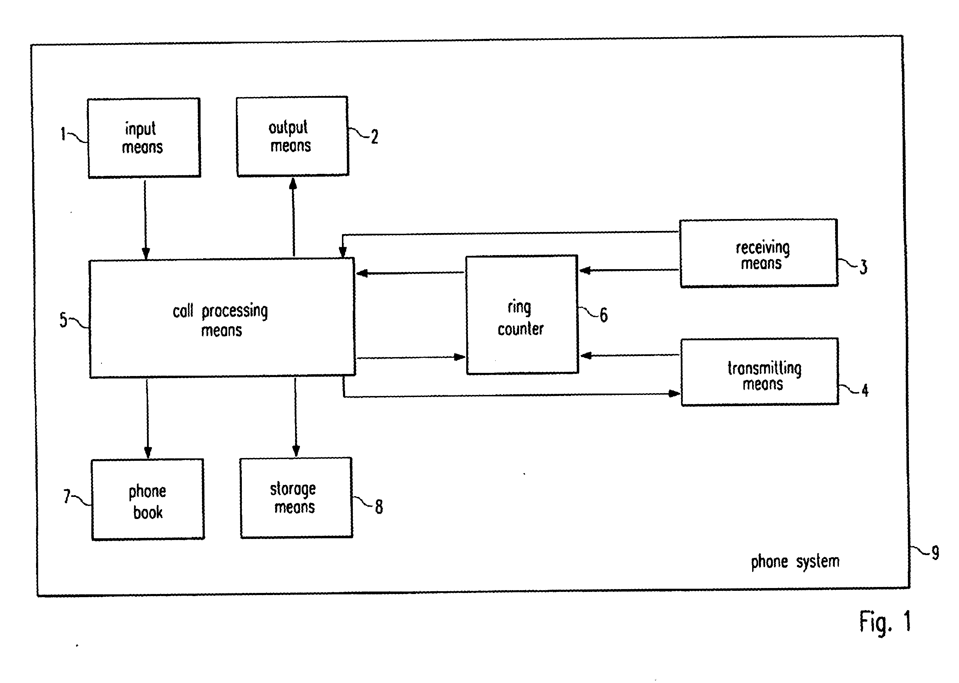

Referring to figure 1 the present invention comprises a phone system 9 for non stationary use, e.g. a mobile phone.

Integrated in this phone system 9 is an input means 1 and an output means 2. The input means 1 for instance a keypad, a touchpad, recognition of speech, an interface for wireless transmission, e.g. via infrared, or for transmission with different means, e.g. a serial cable, enables the user to input data or information. The output means 2 may e.g. be a display, a loudspeaker, an interface for a printer, a fax or a connection to another portable or stationary device, outputs information, data or programs to the user or to another device.
Further, the phone system 9 comprises a receiving means 3 and a transmitting means 4, in both cases this may be an antenna or the like. The receiving means 3 receives incoming calls and the transmitting means 4 transmits outgoing calls.
In addition, the phone system 9 contains a ring counter 6 for counting the number of rings as well of an outgoing call as of an incoming call. Hereford, the ring counter 6 is connected to the transmitting means 4 and/or to the receiving means 3. The ring counter 6 for counting the number of rings measures the time in seconds between the begin and the end of the call. In case of an outgoing call, the phone system 9 gets from the network an *alerting message* when ringing starts at the other end. Knowing that the ringing pattern is normally *tone_on* = 1s and *silence =* 4s (cf. GSM 02.40), to stop the call just after one ring, the phone system 9 shall send a *disconnect message* to the network within 5s, after receiving the *alerting message* from the network. In case of an incoming call, the ring counter 6 counts the seconds from the begin until the end of the call and every 5s correspond to one ring. Furthermore, the phone system 9 contains a phone book 7 for the storage of phone numbers.
In addition, the phone system 9 comprises a storage means 8 for storing information concerning a call or messages.
Further, the phone system 9 comprises a call processing means 5 which receives information from the input means 1, from the phone book 7, from the ring counter 6 and from the receiving means 3 and which processes calls according to the information received. It further outputs data or information to the output means 2 and to the transmitting means 4. In addition, the call processing means 5 stores and/or deletes data or information concerning calls or messages.

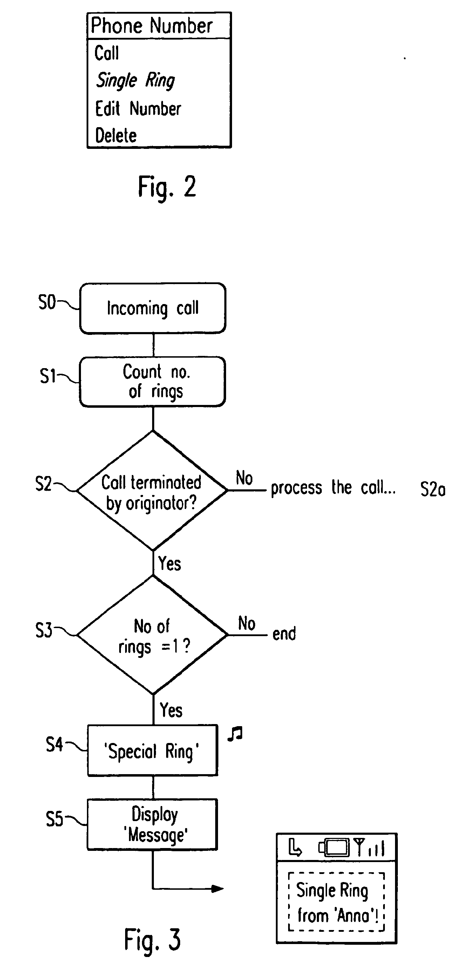

With reference to figure 2 and 3 a first embodiment of the present invention will now be described.

In case of an outgoing call the user via the input means 4 selects a phone number to which a call is to be set up. Hereby, when a phone number to which the call processing means 5 has to set up a call is selected, the user can either input the phone number directly or choose a number stored in the phone book 7. After the user dials a number or chooses a number stored in the phone book 7 he can choose from a user menu (cf. Figure 2), how to process with this number. One possibility is the function 'single ring'. If the user chooses this function, the call processing means 5 sets up a call via the transmitting means 4 to the selected number, the ring counter 6 starts counting and submits this information to the call processing means 5. After one ring counted by the ring counter 6 the call processing means 5 terminates the outgoing call. Further, the call processing means 5 may output information of the processed outgoing call to the user via the output means 2.

In case of an incoming call the processing is shown in figure 3. In a first step S0 a call comes in and is received by the receiving means 3. With the receiving of the call the ring counter 6 starts counting the number of rings in step S 1 and submits this information to the call processing means 5. Based upon the information submitted by the receiving means 3 the call processing means 5 decides, whether the call was terminated by the originator. If not, e.g. if the user of the phone has answered the call, the call is processed accordingly in step S2a. Otherwise the call processing means 5 decides in a step S3 upon the information submitted by the ring counter 6, whether the number of rings is equal to 1. If not, e.g. if the user of the phone did not answer to the call, the processing is stopped. Otherwise the call processing means 5 outputs via the output means 2 a special ring to the loudspeaker in step S4 and a message to the display in step S5, which indicates, that a single ring call has been received, and shows either the number of the phone who called or, if the number is stored in the phone book 7, shows the name under which this number is stored.

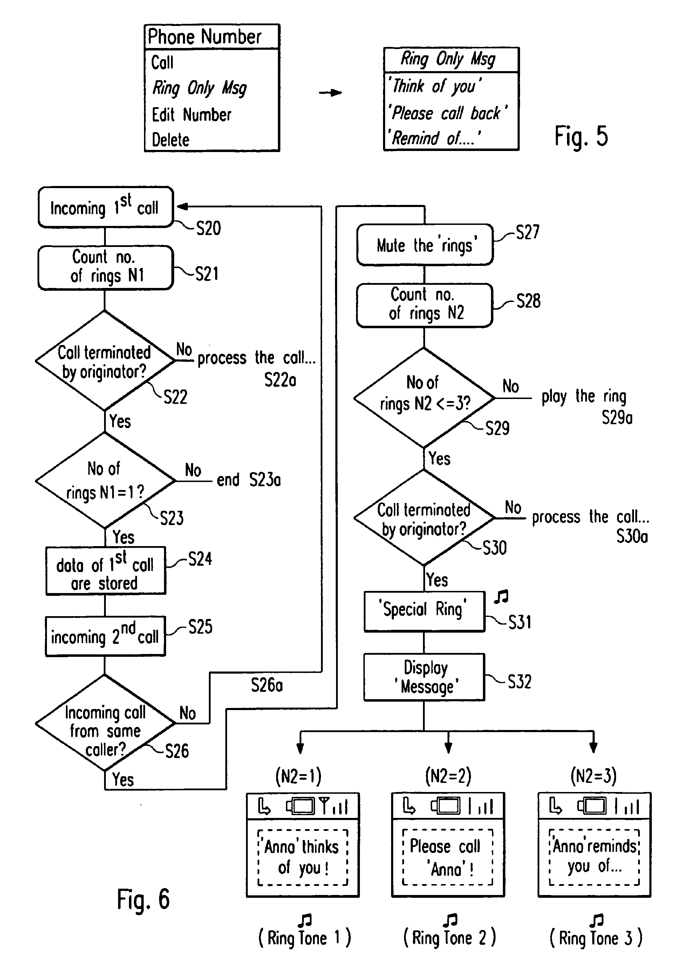

With reference to figure 5 and 6 a second embodiment of the present invention will now be described.

Hereby, in case of an outgoing call a call to the same phone number is set up twice and the first time terminated after one ring and the second time terminated after a predetermined number of rings, depending on the input by the user, to give the user the possibility to send different messages depending on the number of rings of the second call. After the user dials a number or chooses a number stored in the phone book 7 he can choose from a user menu (cf. Figure 5), how to process with this number. One possibility is the function 'ring only message'. Upon choosing this function a further menu will be displayed with the possibility for the user to choose between different messages (in the present embodiment between three messages), which one he wants to submit to this selected phone number. After having chosen the message, the call processing means 5 sets up a call via the transmitting means 4, the ring counter 6 starts counting and the first call is terminated after one ring. Then the call processing means 5 automatically sets up a second call via the transmitting means 4 to the same number and terminates the call after one, two or three (or even more) rings depending on the message chosen by the user. If the user for example selects the first message, the second call is terminated after one ring, if the user selects the second message, the second call is terminated after two rings and so on.

In case of an incoming call the process is shown in figure 6. In a first step S20 the first and the second call come in and are received by the receiving means 3. With the receiving of the calls the ring counter 6 starts counting the number of rings in step S21 and submits this information to the call processing means 5. Based upon the information submitted by the receiving means 3 the call processing means 5 decides, whether the first call was terminated by the originator in step S22. If not, e.g. if the user of the phone has answered the call, the call is processed accordingly in step S22a. Otherwise the call processing means 5 decides in a step S23 upon the information submitted by the ring counter 6, whether the number of rings of the first call is equal to 1. If not, e.g. if the user of the phone did not answer to the first call, the processing is stopped in step S23a. Otherwise the data concerning this call, e.g. time and number, are stored in the storage means 8. If now in step S25 a second call is coming in, the call processing means 5 checks, if the second call comes from the same number as the first call. If not, the process starts again with step S20 and the second call is handled as a first incoming call. Otherwise for the second incoming call the mute function is activated in a step S27, this means that the mobile phone is not ringing. The ring counter 6 counts the number of rings of the second call in step S28 and submits this information to the call processing means 5,which in a step S29 decides, whether the number of rings is less or equal to 3. If not, from the 4^{th} ring on the mute function is disactivated and the rings are played in step S29a. Otherwise the call processing means 5 decides in the next step S30, if the call is terminated by the originator. If not, e.g. if the user answered the call before the 4^{th} ring, then the call is processed accordingly in step S30a. Otherwise the call processing means 5 outputs via the output means 2 a special ring to the loudspeaker in step S31 and a message to the display in step S32 with either the number of the phone who called or, if the number is stored in the phone book 7, shows the name under which this number is stored. Hereby, there type of message, which is displayed depends on the number of rings of the second call. If, as in the present case, the number of rings of the second call is 1, then the first message is displayed, if the number of rings of the second call is 2, then the second message is displayed and so on.

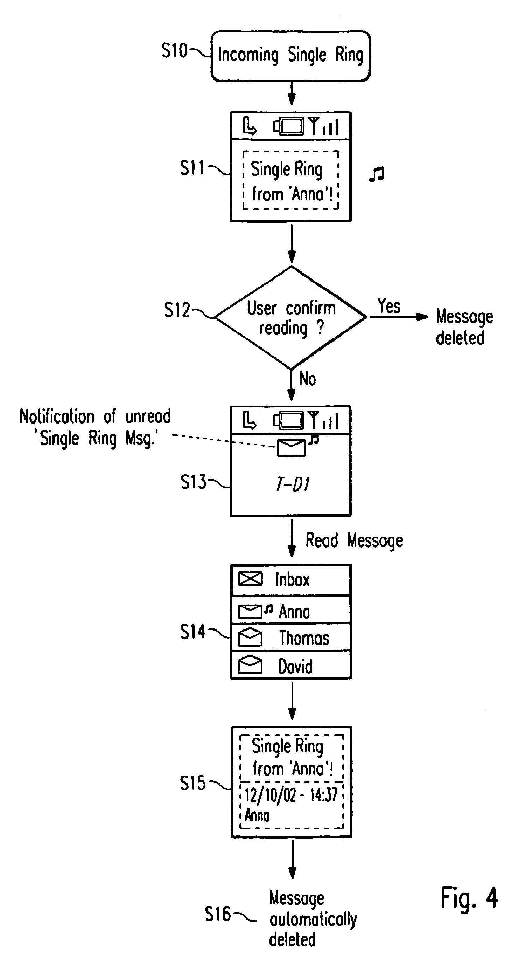

With reference to figure 4 the processing of a displayed message, which is not read immediately by the user is shown. This processing relates to both the first and the second embodiment of the invention.

In a first step S10 a call comes in, is processed (not shown) according to the processing of incoming calls as explained above and results in displaying a message in step S11. The call processing means 5 detects and decides after a predefined time, e.g. 20 seconds, if the user read the message or not in step S12. If yes, the message is deleted in step S12a. Otherwise a symbol is displayed to indicate an unread single ring message or an unread ring only message in step S13 and the message is stored in the storage means 8. In a next step S14 the user can access the storage means 8 via the call processing means 5 and the input means 1 and get displayed a list of messages stored in the storage means 8. If the user then reads the stored single ring message or ring only message in step S15 the message is automatically deleted by the call processing means 5 in step S16.

This system and method is also applicable, when a call is set up between a mobile phone who does not have this special single ring or ring only message function and another mobile phone that has integrated this function.
If for example the caller does not have the single ring or only ring message function, he has to set up a call and stop it manually after a certain time. The receiving mobile phone with the described special function will then process the incoming call as explained in the two embodiments above, independent from the calling mobile phone, and the special messages will be displayed..
In another case, where the calling mobile phone contains the single ring or ring only function, one or more calls are set up to another mobile phone and terminated automatically after a predetermined number of rings. The receiving phone will then display the time, date and number of one or more calls, which have been not answered. If the users of both mobile phones pre-agreed a meaning of such single ring call, then the meaning of the call will be clear to the user of the receiving phone.

It is further possible to decouple the functions of terminating an outgoing call after a predetermined number of rings and the function of processing an incoming call according to the number of rings and to implement only one function in a mobile terminal.
In case of the function for an outgoing call, the ring counter 6 is connected only to the transmitting means 4 and not to the receiving means 3 and counts the number of rings of an outgoing call transmitted by the transmitting means 4. The call processing means 5 is only able to terminate one or more outgoing calls after a predetermined number of rings counted by the ring counter 5.
In case of the function for an incoming call, the ring counter 6 is only connected to the receiving means 3 and not to the transmitting means 4 and counts the number of rings of incoming calls and submits this information to the call processing means 5. As set out above, the information of a first incoming call is stored in the storage means 8. The call processing means 5 is able to decide upon the information received by the ring counter and the information stored in the storage means 8, how to process the incoming call.

## Claims

1. Mobile terminal for a wireless communication system with
an input means (1) for the input of information by a user,
a transmitting means (4) for transmitting a call to a phone number selected by the user, a ring counter (6) for counting the number of rings of an outgoing call transmitted by the transmitting means (4) and
a call processing means (5) for setting up a call via the transmitting means (4) and terminating the call after a predefined number of rings counted by the ring counter (6) according to a ring counting information input by the user,
**characterized in**
**that** the ring counter (6) is adapted to count the number of rings by measuring the time between the beginning and the end of a call according to disconnect and alerting messages sent to and received from the network.

2. Mobile terminal according to claim 1,
**characterized in,**
**that** an output means (2) is adapted to output information of a call processed by the call processing means (5) to the user.

3. Mobile terminal according to one of the claims 1 or 2,
**characterized in**,
a ring counting menu for enabling the user to select via the input means (4) the number of calls which are terminated by the call processing means (5) after a predefined number of rings.

4. Mobile terminal according to claim 3,
**characterized in,**
**that** the ring counting menu is adapted to enable the user to select via the input means (4) the number of rings after which the call processing means (5) terminates the calls.

5. Mobile terminal according to one of the claims 1 to 4,
**characterized in**,
a phone book (7) for storing phone numbers input by the user.

6. Mobile terminal according to one of the claims 1 to 5,
**characterized in**,
a storage means (8) for storing information of an outgoing call.

7. Mobile terminal according to one of the claims 1 to 6,
**characterized in,**
**that** the call processing means (5) is adapted to set up one call and terminates the call after one ring counted by the ring counter (6).

8. Mobile terminal according to one of the claims 1 to 6,
**characterized in,**
**that** the call processing means (5) is adapted to set up two calls to the same number and terminates the first call after one ring and the second call after a predefined number or rings counted by the ring counter (6).

9. Mobile terminal according to claim 8,
**characterized in,**
**that** the predefined number of rings, after which the call processing means (5) terminates the second call is a number from 1 to 3.

10. Mobile terminal for a wireless communication system with
an output means (2) for outputting information to an user,
a receiving means (3) for receiving a call,
a ring counter (6) for counting the number of rings of an incoming call received by the reiceiving means (3) and
a call processing means (5) for outputting via the output means (2) information of an incoming call to a user according to the number of rings counted by the ring counter (6),
**characterized in**
**that** the ring counter (6) is adapted to count the number of rings by measuring the time between the beginning and the end of a call according to alerting and disconnect messages sent to and received from the network.

11. Mobile terminal according to claim 10,
**characterized in,**
**that** an input means (1) is adapted to accept input of information by a user.

12. Mobile terminal according one of the claims 10 or 11,
**characterized in**,
a phone book (7) for storing phone numbers input by the user.

13. Mobile terminal according to one the claims 10 to 12,
**characterized in**,
a storage means (8) for storing information of a first incoming call.

14. Mobile terminal according to one of the claims 10 to 13,
**characterized in,**
**that** the call processing means (5) is adapted to compare the number of a second incoming call with the number of the first incoming call stored in the storage means (8).

15. Mobile terminal according to one of the claims 10 to 14,
**characterized in,**
**that** the call processing means (5) is adapted to output via the output means (2) a single ring message, if the number of the second incoming call is not the same as the number of first incoming call and if the first call is terminated after one ring counted by the ring counter (6).

16. Mobile terminal according to one of the claims 10 to 14,
**characterized in,**
**that** the call processing means (5) is adapted to output a special message via the output means (2), if the number of the second incoming call is the same as the number of the first incoming call and if the first call was terminated after one ring and the second call terminated after one, two or three rings.

17. Mobile terminal according to claim 16,
**characterized in,**
**that** the content of the special message depends on the number of rings of the second incoming call counted by the ring counter (5).

18. Mobile terminal according to one of the preceding claims,
**characterized in,**
**that** the messages are stored in the storage means (8) and automatically deleted after they have been read by the user.

## Patentansprüche

1. Mobiler Terminal für ein drahtloses Kommunikationssystem mit
einem Eingabemittel (1) für die Eingabe von Informationen durch einen Anwender,
einem Übermittlungsmittel (4) zum Übermitteln eines Anrufs an eine von dem Anwender ausgewählte Nummer,
einem Klingelzeichenzähler (6) zum Zählen der Anzahl von Klingelzeichen eines ausgehenden Anrufs, welcher durch das Übermittlungsmittel (4) übermittelt wird, und
einem Anrufverarbeitungsmittel (5) zum Aufbauen eines Anrufs über das Übermittlungsmittel (4) und Beenden des Anrufs nach einer vorbestimmten Anzahl von durch den Klingelzeichenzähler (6) gezählten Klingelzeichen gemäß einer durch den Anwender eingegebenen Klingelzeichenzählerinformation,
**dadurch gekennzeichnet,**
**dass** der Klingelzeichenzähler (6) angepasst ist, die Anzahl der Klingelzeichen durch Messen der Zeit zwischen dem Anfang und dem Ende eines Anrufs gemäß Trenn- und A-larmnachrichten, welche an das Netzwerk gesendet und von dem Netzwerk empfangen werden, zu zählen.

2. Mobiler Terminal nach Anspruch 1.
**dadurch gekennzeichnet,**
**dass** ein Ausgabemittel (2) angepasst ist, Informationen eines Anrufs, welcher durch das Anrufverarbeitungsmittel (5) verarbeitet wird, an den Anwender auszugeben.

3. Mobiler Terminal nach Anspruch 1 oder 2,
**gekennzeichnet durch**
ein Klingelzeichenzählermenü zum Ermöglichen, dass ein Anwender über das Eingabemittel (4) die Anzahl der Anrufe, welche **durch** das Anrufverarbeitungsmittel (5) nach einer bestimmten Anzahl von Klingelzeichen beendet sind, auswählt.

4. Mobiler Terminal nach Anspruch 3,
**dadurch gekennzeichnet,**
**dass** das Klingelzeichenzählermenü angepasst ist, dem Anwender zu ermöglichen, über das Eingabemittel (4) die Anzahl der Klingelzeichen, nach welchen das Anrufverarbeitungsmittel (5) den Anruf beendet, auszuwählen.

5. Mobiler Terminal nach einem der Ansprüche 1 bis 4,
**gekennzeichnet durch**
ein Telefonbuch (7) zum Speichern von **durch** den Anwender eingegeben Telefonnummern.

6. Mobiler Terminal nach einem der Ansprüche 1 bis 5,
**gekennzeichnet durch**
ein Speichermittel (8) zum Speichern von Informationen eines ausgehenden Anrufs.

7. Mobiler Terminal nach einem der Ansprüche 1 bis 6,
**dadurch gekennzeichnet,**
**dass** das Anrufverarbeitungsmittel (5) angepasst ist, einen Anruf aufzubauen und den Anruf nach einem von dem Klingelzeichenzähler (6) gezählten Klingelzeichen zu beenden.

8. Mobiler Terminal nach einem der Ansprüche 1 bis 6,
**dadurch gekennzeichnet,**
**dass** das Anrufverarbeitungsmittel (5) angepasst ist, zwei Anrufe zu der gleichen Nummer aufzubauen und den ersten Anruf nach einem Klingelzeichen und den zweiten Anruf nach einer bestimmten Anzahl von dem Klingelzeichenzähler (6) gezählten Klingelzeichen zu beenden.

9. Mobiler Terminal nach Anspruch 8,
**dadurch gekennzeichnet,**
**dass** die bestimmte Anzahl von Klingelzeichen, nach welchen das Anrufverarbeitungsmittel (5) den zweiten Anruf beendet, eine Zahl von 1 bis 3 ist.

10. Mobiler Terminal für ein drahtloses Kommunikationssystem mit
einem Ausgabemittel (2) zum Ausgeben von Informationen an einen Anwender,
einem Empfangsmittel (3) zum Empfangen eines Anrufs,
einem Klingelzeichenzähler (6) zum Zählen der Anzahl von Klingelzeichen eines eingehenden und durch das Empfangsmittel (3) empfangenen Anrufs und
einem Anrufverarbeitungsmittel (5) zum Ausgeben von Informationen eines eingehenden Anrufs an einen Anwender über das Ausgabemittel (2) entsprechend der Anzahl von durch den Klingelzeichenzähler (6) gezählten Klingelzeichen,
**dadurch gekennzeichnet,**
**dass** der Klingelzeichenzähler (6) angepasst ist, die Anzahl von Klingelzeichen durch Messen der Zeit zwischen dem Anfang und dem Ende des Anrufs gemäß Alarm- und Trennnachrichten, welche an das Netzwerk gesendet und von dem Netzwerk empfangen werden, zu zählen

11. Mobiler Terminal nach Anspruch 10,
**dadurch gekennzeichnet,**
**dass** das Eingabemittel (1) angepasst ist, Eingaben von Informationen durch einen Anwender zu übernehmen.

12. Mobiler Terminal nach Anspruch 10 oder 11,
**gekennzeichnet durch**
ein Telefonbuch (7) zum Speichern von **durch** den Anwender eingegebene Telefonnummern.

13. Mobiler Terminal nach einem der Ansprüche 10 bis 12,
**gekennzeichnet durch**
ein Speichermittel (8) zum Speichern von Informationen eines ersten eingehenden Anrufs.

14. Mobiler Terminal nach einem der Ansprüche 10 bis 13,
**dadurch gekennzeichnet,**
**dass** das Anrufverarbeitungsmittel (5) angepasst ist, die Nummer eines zweiten eingehenden Anrufs mit der Nummer des in auf dem Speichermittel (8) gespeicherten ersten eingehenden Anrufs zu vergleichen.

15. Mobiler Terminal nach einem der Ansprüche 10 bis 14,
**dadurch gekennzeichnet,**
**dass** das Anrufverarbeitungsmittel (5) angepasst ist, über das Ausgabemittel (2) eine einzelne Signaltonnachricht auszugeben, falls die Nummer des zweiten eingehenden Anrufs nicht dieselbe wie die Nummer des ersten eingehenden Anrufs ist und falls der erste Anruf nach einem von dem Klingelzeichenzähler (6) gezählten Klingelzeichen beendet wird.

16. Mobiler Terminal nach einem der Ansprüche 10 bis 14,
**dadurch gekennzeichnet,**
**dass** das Anrufverarbeitungsmittel (5) angepasst ist, eine spezielle Nachricht über das Ausgabemittel (2) auszugeben, falls die Nummer des zweiten eingehenden Anrufs dieselbe ist wie die Nummer des ersten eingehenden Anrufs und falls der erste Anruf nach einem Klingelzeichen und der zweite Anruf nach einem, zwei oder drei Klingelzeichen beendet worden ist.

17. Mobiler Terminal nach Anspruch 16,
**dadurch gekennzeichnet,**
**dass** der Inhalt der speziellen Nachricht von der von dem Klingelzeichenzähler (5) gezählten Anzahl der Klingelzeichen des zweiten eingehenden Anrufs abhängt.

18. Mobiler Terminal nach einem der vorhergehenden Ansprüche,
**dadurch gekennzeichnet,**
**dass** die Nachrichten in dem Speichermittel (8) gespeichert werden und automatisch nach Lesen durch den Anwender gelöscht werden.

## Revendications

1. Terminal mobile pour un système de communication sans fil, comprenant :
un moyen de saisie (1) destiné à la saisie d'informations par un utilisateur ;
un moyen d'émission (4) destiné à émettre un appel vers un numéro de téléphone sélectionné par l'utilisateur ;
un compteur de sonneries (6), destiné à compter le nombre de sonneries d'un appel sortant émis par le moyen d'émission (4) ; et
un moyen de traitement d'appels (5) destiné à établir un appel à l'aide du moyen d'émission (4) et à interrompre l'appel après un nombre prédéterminé de sonneries comptées par le compteur de sonneries (6), sur la base d'informations de comptage de sonneries saisies par l'utilisateur ;
**caractérisé en ce que** :
le compteur de sonneries (6) est conçu pour compter le nombre de sonneries en mesurant le temps s'écoulant entre le début et la fin d'un appel, en fonction de messages de déconnexion et d'alerte envoyés à destination et reçus en provenance du réseau.

2. Terminal mobile selon la revendication 1, **caractérisé en ce qu'**un moyen de sortie (2) est conçu pour produire en sortie à l'attention de l'utilisateur des informations sur un appel traité par le moyen de traitement d'appels (5).

3. Terminal mobile selon la revendication 1 ou 2, **caractérisé en ce qu'**un menu de comptage des sonneries destiné à permettre à l'utilisateur de sélectionner, à l'aide du moyen de saisie (1), le nombre d'appels qui sont interrompus par le moyen de traitement d'appels (5) après un nombre prédéterminé de sonneries.

4. Terminal mobile selon la revendication 3, **caractérisé en ce que** le menu de comptage des sonneries est conçu pour permettre à l'utilisateur de sélectionner, à l'aide du moyen de saisie (1), le nombre de sonneries après lequel le moyen de traitement d'appels (5) interrompt les appels.

5. Terminal mobile selon l'une des revendications 1 à 4, **caractérisé par** un répertoire téléphonique destiné à stocker des numéros saisis par l'utilisateur.

6. Terminal mobile selon l'une des revendications 1 à 5, **caractérisé par** un moyen de stockage (8) destiné à stocker des informations d'un appel sortant.

7. Terminal mobile selon l'une des revendications 1 à 6, **caractérisé en ce que** le moyen de traitement d'appels (5) est conçu pour établir un appel et interrompre l'appel après une sonnerie comptée par le compteur de sonneries (6).

8. Terminal mobile selon l'une des revendications 1 à 6, **caractérisé en ce que** le moyen de traitement d'appels (5) est conçu pour établir deux appels vers le même numéro et pour interrompre le premier appel après une sonnerie et le second appel après un nombre prédéterminé de sonneries décomptées par le compteur de sonneries (6).

9. Terminal mobile selon la revendication 8, **caractérisé en ce que** le nombre prédéterminé de sonneries après lequel le moyen de traitement d'appels (5) interrompt le second appel est un nombre compris entre 1 et 3.

10. Terminal mobile pour un système de communication sans fil, comprenant :
un moyen de sortie (2), destiné à produire en sortie des informations à l'attention d'un utilisateur ;
un moyen de réception (3) destiné à recevoir un appel ;
un compteur de sonneries (6) destiné à compter le nombre de sonneries d'un appel entrant reçu par le moyen de réception (3) ; et
un moyen de traitement d'appels (5) destiné à produire à l'aide du moyen de sortie (2) des informations sur un appel entrant à l'attention d'un utilisateur, en fonction du nombre de sonneries décomptées par le compteur de sonneries (6) ;
**caractérisé en ce que** :
le compteur de sonneries (6) est conçu pour compter le nombre de sonneries en mesurant le temps s'écoulant entre le début et la fin d'un appel, en fonction de messages de déconnexion et d'alerte envoyés à destination et reçus en provenance du réseau.

11. Terminal mobile selon la revendication 10, **caractérisé en ce qu'**un moyen de saisie (1) est conçu pour accepter la saisie d'informations par un utilisateur.

12. Terminal mobile selon l'une des revendications 10 et 11, **caractérisé par** un répertoire téléphonique (7) destiné à stocker des numéros saisis par l'utilisateur.

13. Terminal mobile selon l'une des revendications 10 à 12, **caractérisé par** un moyen de stockage (8) destiné à stocker des informations d'un premier appel entrant.

14. Terminal mobile selon l'une des revendications 10 à 13, **caractérisé en ce que** le moyen de traitement d'appels (5) est conçu pour comparer le numéro d'un second appel entrant avec le numéro d'un premier appel entrant stocké dans le moyen de stockage (8).

15. Terminal mobile selon l'une des revendications 10 à 14, **caractérisé en ce que** le moyen de traitement d'appels (5) est conçu pour produire en sortie, sur le moyen de sortie (2), un message de sonnerie simple si le numéro du second appel entrant n'est pas le même que le numéro du premier appel entrant et si le premier appel est interrompu après une sonnerie décomptée par le compteur de sonneries (6).

16. Terminal mobile selon l'une des revendications 10 à 14, **caractérisé en ce que** le moyen de traitement d'appels (5) est conçu pour produire en sortie un message spécial, sur le moyen de sortie (2), si le numéro du second message entrant est le même que le numéro du premier appel entrant et si le premier appel a été interrompu après une sonnerie et le second appel est interrompu après une, deux ou trois sonneries.

17. Terminal mobile selon la revendication 16, **caractérisé en ce que** le contenu du message spécial dépend du nombre de sonneries du second appel entrant décomptées par le compteur de sonneries (6).

18. Terminal mobile selon l'une des revendications précédentes, **caractérisé en ce que** les messages sont stockés dans le moyen de stockage (8) et sont automatiquement détruits après avoir été lus par l'utilisateur.
